# EUROPEAN PATENT APPLICATION

(11) **EP 4 723 564 A1**
(43) Date of publication of application: **08.04.2026**
(21) Application number: 24915863.5
(22) Date of filing: 01.08.2024
(51) Int. Cl.: H04L 12/40, H04L 67/12, H04L 67/562

(54) **MQTT-BASED MODBUS NETWORK SYSTEM AND DATA TRANSMISSION METHOD**

(71) Applicant: Delta Electronics, Inc., Taoyuan City 320023, Taiwan (TW)
(72) Inventor: LAI, Chun-Fu, Taoyuan City 320023 (TW)
(74) Representative: 2K Patentanwälte Blasberg Kewitz & Reichel
(86) International application number: PCT/CN2024/109252
(87) International publication number: WO 2026/025447

(57) **Abstract**

An MQTT-based Modbus network system is disclosed. The network system includes: multiple master devices, multiple slave devices, a master connector connected with the multiple master devices through Modbus protocol, a slave connector connected with the multiple slave devices through Modbus protocol, and an MQTT broker connected with the master connector and the slave connector through MQTT protocol. The master connector publishes a requesting message to the MQTT broker based on a request from the master devices and manages a responding message aimed at the requesting message. The slave connector transmits sensing data of the slave devices or responds to one or more of the master devices, either based on an updating status of the sensing data of the slave devices or based on the requesting message published by the master connector.

## Description

### Technical Field

The present disclosure relates to a Modbus network, and particularly to a Modbus network implemented by combining MQTT, and to a MQTT-based Modbus network system and data transmitting method.

### Background of Related Art

The current Modbus network architecture uses a gateway to obtain device data through Modbus protocol. After labeling the data, the Modbus network architecture then sends the data to the back-end data center (data hub).

The traditional Modbus network architecture includes master devices (e.g., data collectors), slave devices, and a remote server of the Modbus network. The master devices may connect with multiple slave devices through same or different protocols and connect with the remote server through TCP/IP.

When a master device sends a request (e.g., a first request) to one of the slave devices but does not receive a response within a timeout period, the master device will resend the same request (e.g., a second request) to the same slave device. In the meantime, the slave device may send a response with respect to the first request or the second request. Within standard Modbus protocol, only the data length is known, but which temporary storage address the data corresponds to is unknown. Therefore, when the master device receives the returned response, it may correspond the data wrongly.

In view of the aforementioned issue, Modbus protocol is usually utilized to local communication (i.e., the transmission of requests and responses only takes 10ms~500ms, and the timeout interval between two polls is about 1 second), and is difficult to be utilized to the environments with relatively long delays (such as the Internet), where the connection often exceeds 500ms or even exceeds 1 second. In addition, the packets transmitted through Modbus protocol are transmitted in plaintext. If the Modbus protocol is to be applied to the Internet, information security issues must be considered.

### SUMMARY OF THE DISCLOSURE

The present disclosure provides an MQTT-based Modbus network system and a data transmission method, which utilize the characteristics of MQTT protocol to connect multiple Modbus networks, so that the MQTT protocol can be applied to the Internet which suffers from longer delays, and the information security of the packets may also be improved.

In one embodiment, the MQTT-based Modbus network system includes:
multiple first master devices, each of the first master devices respectively configured to send a request;
multiple first slave devices, each of the first slave devices respectively configured to generate sensing data;
an MQTT broker;
a first master connector, connected with the multiple first master devices through Modbus protocol and connected with the MQTT broker through MQTT protocol, configured to publish a requesting message to the MQTT broker based on the requests of the multiple first master devices and manage a responding message related to the requesting message; and
a first slave connector, connected with the multiple first slave devices through the Modbus protocol and connected with the MQTT broker through the MQTT protocol, configured for:
   transmitting sensing data of the multiple first slave devices through the MQTT broker based on an updating status of the sensing data of the multiple first slave devices; or, responding to one or more of the multiple first master devices according to the requesting message from the first master connector.

In one embodiment, the data transmitting method is applied to the network system and includes following steps:
a) respectively sending a request by the multiple first master devices and respectively generating sensing data by the multiple first slave devices;
b) publishing a requesting message to the MQTT broker based on the requests from the multiple master devices by the first master connector;
c) transmitting the requesting message to the first slave connector by the MQTT broker; and
d) by the first slave connector, transmitting the sensing data from the multiple slave devices through the MQTT broker based on an updating status of the sensing data of the multiple slave devices, or responding to one or more of the multiple first master devices through the MQTT broker based on the requesting message from the first master connector.

In comparison with related arts, the present disclose utilizes an MQTT broker, a master connector, and a slave connector to connect Modbus networks through the MQTT protocol. Also, the present disclosure applies a self-defined MQTT topic structure, so that the Modbus protocol can be applied to the Internet to expand the applicable scope of the Modbus protocol.

### DISCRIPTION OF THE DRAWINGS

FIG. 1 is a schematic diagram showing the connection of the network system according to a first embodiment of the present disclosure.
FIG. 2 is a schematic diagram showing an MQTT topic structure of the present disclosure.
FIG. 3 is a schematic diagram showing the data transmission under a bridge mode of the present disclosure.
FIG. 4 is a schematic diagram showing the data transmission under a tag mode of the present disclosure.
FIG. 5 is a first flowchart showing the data transmitting method of the present disclosure.
FIG. 6 is a chronology chart under the bridge mode of the present disclosure.
FIG. 7 is a second flowchart of the data transmitting method of the present disclosure.
FIG. 8 is a third flowchart of the data transmitting method of the present disclosure.
FIG. 9 is a schematic diagram showing the connection of the network system according to a second embodiment of the present disclosure.

### EXPLANATION OF THE MARKINGS ON THE DRAWINGS

11: data collector
12: device
13: remote server
21: master device
211: first master device
212: second master device
213: third master device
22: slave device
3: master connector
30: master cache
4: slave connector
40: slave cache
5: MQTT broker
51: topic structure
511: plant information
512: network information
513: mode information
514: slave device ID information
515: master device ID information
516: sequence information
6: monitoring connector
61: management department
S61~S64: transmitting steps
S711~S718, S721~S728: transmitting steps
S81~S86: transmitting steps
S91~S95: transmitting steps

### DETAILED DESCRIPTION OF THE INVENTION

The present disclosure provides an MQTT-based Modbus network system (referred to as the network system in the specification hereinafter), and a data transmitting method used by the network system. The message content of MQTT (Message Queuing Telemetry Transport) protocol is very simple, which is suitable for being applied to IoT (Internet of Thing) devices to assist the IoT devices to transit their data to cloud servers for analyzing, storing, and using. The messages included in the MQTT protocol include header, topic, and payload, and the objects involved in the MQTT protocol include a publisher who is considered the message sender, a broker who is considered the message mediator, and a subscriber who is considered the message receiver. The present disclosure uses the characteristics of the MQTT protocol to overcome the drawback of the Modbus protocol, enable the Modbus protocol to be applied to the Internet that has longer delays and strengthen the data security of the Modbus protocol.

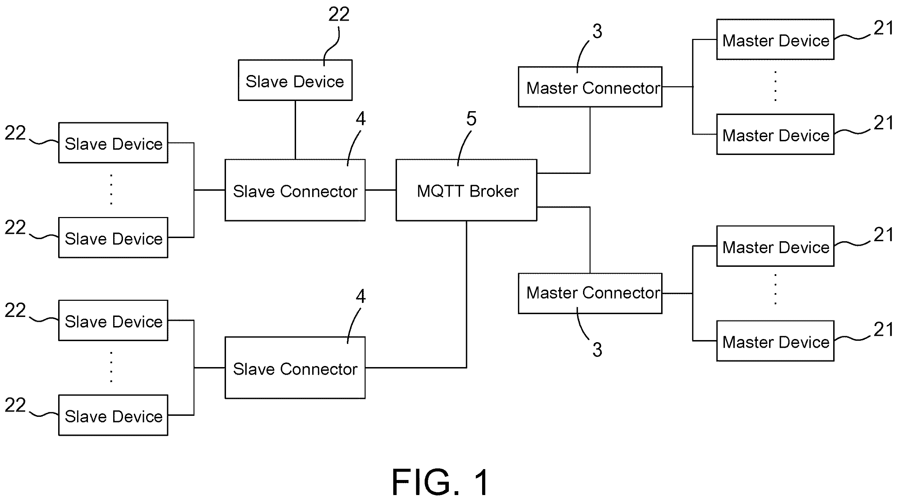

Please refer to FIG. 1, which is a schematic diagram showing the connection of the network system according to a first embodiment of the present disclosure. The network system of the present disclosure includes multiple master devices 21, multiple slave devices 22, at least one MQTT broker 5, at least one master connector 3, and at least one slave connector 4. The multiple master devices 21 are master devices under the Modbus protocol (such as data collectors) used for sending requests in the Modbus network. The multiple slave devices 22 are slave devices under the Modbus protocol, such as different types of sensors or programmable logic controllers (PLCs), etc. The multiple slave devices 22 are used to generate different types of sensing data or testing data, and respond to the requests sent by one or more master devices 21.

The master connector 3 connects with multiple master devices 21 through the Modbus protocol. The slave connector 4 connects with the multiple slave devices 22 through the Modbus protocol. In other words, the master connector 3 and the slave connector 4 respectively communicate with Modbus device(s) through the Modbus protocol to transmit both the requests and the responses.

On the other hand, the master connector 3 and the slave connector 4 respectively connect with the MQTT broker 5 through the MQTT protocol, and the master connector 3 and the slave connector 4 respectively become a publisher and a subscriber in the MQTT protocol according to current tasks. For example, when one of the multiple master devices 21 sends a request with respect to a target slave device, the master connector 3 generates a requesting message satisfying the MQTT protocol based on this request and publishes the requesting message to the MQTT broker 5, and the slave connector 4 who connects with the target slave device may automatically obtain this requesting message from the MQTT broker 5. In this embodiment, the requesting message published by the master connector 3 includes a specific topic with which the slave connector 4 has subscribed. Therefore, the master connector 3 becomes the publisher in the MQTT protocol, while the slave connector 4 becomes the subscriber in the MQTT protocol.

For another embodiment, the slave connector 4 inquires the target slave device based on the content of the requesting message to obtain corresponding sensing data, and the slave connector 4 generates a responding message satisfying the MQTT protocol based on the sensing data and publishes the responding message to the MQTT broker 5. The master connector 3 automatically obtains this responding message from the MQTT broker 5 and manages this responding message (for example, responds this responding message to the master device 21 who sends the request at a suitable timepoint), or ignores a timeout response (for example, the master device 21 has already sent a new request). In this embodiment, the responding message published by the slave connector 4 includes the same specific topic with which the master connector 3 has subscribed. Therefore, the slave connector 4 becomes the publisher in the MQTT protocol, while the master connector 3 becomes the subscriber in the MQTT protocol.

In one embodiment, when establishing the network system, the user needs to first set MQTT connection parameters to the master connector 3, the slave connector 4, and the MQTT broker 5. For example, the user sets the subscribed topic(s) for the master connector 3 and the slave connector 4. Next, the user sets the device number of each master device 21 and each slave device 22, connects each master device 21 to the master connector 3 and connects each slave device 22 to the slave connector 4, so as to complete the basic configuration of the network system. In another embodiment, the user only needs to set a network group while establishing the network system, the rest of the messages will be automatically imported by the connectors (i.e., the master connector 3 and the slave connector 4). When multiple slave connectors 4 exist, each of the slave connectors 4 can be respectively set with a whitelist (or a blacklist) to avoid receiving and processing unnecessary requests.

As shown in FIG. 1, the network system may include multiple slave connectors 4 (such as a first slave connector and a second slave connector), wherein the first slave connector is connected with one or more slave devices 22 (e.g., first slave devices), the second connector is connected with one or more slave devices 22 (e.g., second slave devices). The first slave connector inquires the one or more first slave devices based on the received request and generates a response, without receiving the message sent by the second slave connector. Similarly, the second slave connector inquires the one or more second slave devices based on the received request and generates a response, without receiving the message sent by the first slave connector.

One of the technical features of the present disclosure is that, the master connector 3 may send the requesting message to the slave connector 4 through two or more than two different modes, and vice versa (detailed described in the following). Based on different modes, the slave connector 4 may: (1) based on the updating status of the sensing data of multiple slave devices 22, transmit the sensing data of the multiple slave devices 22 through the MQTT broker 5; or (2) based on the requesting message sent by the master device 21, directly respond to one or more of the multiple master devices 21 who send the request through the MQTT broker 5, after receiving the requesting message. In the following paragraphs, the present disclosure will further interpret how the master connector 3 and the slave connector 4 work under different modes.

In the present disclosure, the master connector 3 connects with the multiple master devices 21 through the Modbus protocol, and the master devices 21 directly send the request to the master connector 3. To the master devices 21, the master connector 3 plays a role of the slave device in the Modbus network which may receive the request sent by the master devices 21 and generate a response with respect to the request. Similarly, the slave connector 4 connects with the multiple slave devices 22 through the Modbus protocol, and the slave devices 22 receive request from the slave connector 4 and directly respond data corresponding to this request to the slave connector 4. To the slave devices 22, the slave connector 4 plays a role of the master device in the Modbus network which may request the slave devices 22 and receive the responded data from the slave devices 22. Besides, after receiving the requesting message(s) published by the master connector 3, the slave connector 4 can first manage and schedule multiple requesting messages, or manage and schedule multiple requests within one requesting message, and based on the content of the topic included in the requesting message (detailed described in the following), transmit the request to a corresponding one of the slave devices 22 and receive the sensing data returned from the corresponding one of the slave devices 22.

As discussed above, the master devices 21 send the request in accordance with the Modbus protocol and the slave devices 22 respond to the request with the sensing data in accordance with the Modbus protocol as well. The present disclosure configures the master connector 3, the slave connector 4, and the MQTT broker 5 in the network system, connects multiple Modbus networks through the MQTT protocol, and defines topic(s) within the MQTT protocol, so as to address the problem that the Modbus protocol is weak in handling long transmission delays and cannot associate requests with responses. It should be mentioned that the MQTT protocol itself supports encrypting process for packets, so information security problem caused by the Modbus protocol in transmitting packets in plaintext can be further resolved.

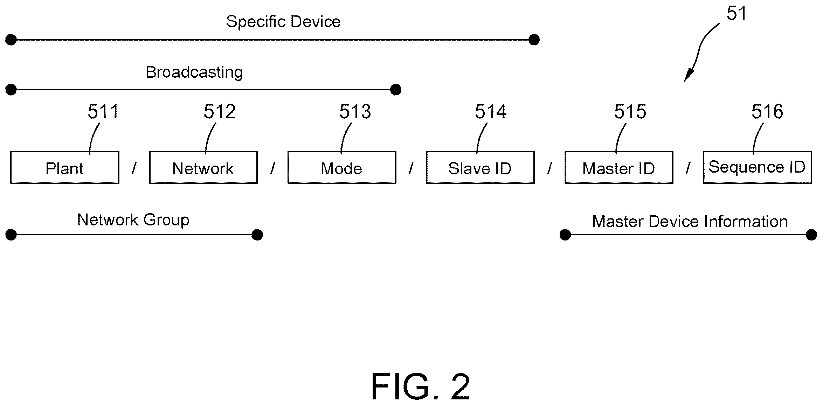

Please refers to FIG. 1 and FIG. 2 at the same time, wherein FIG. 2 is a schematic diagram showing an MQTT topic structure of the present disclosure.

As disclosed above, the MQTT message includes header, topic, and content, wherein the content can be, for example, the request sent by the master device 21 or the sensing data responded by the slave device 22. Based on the MQTT protocol, the requesting message published by the master connector 3 includes a designated topic (such as a first topic). If the slave connector 4 has subscribed to the first topic from the MQTT broker 5, every time when the master connector 3 publishes a requesting message including the first topic to the MQTT broker 5, the slave connector 4 can automatically obtain this requesting message from the MQTT broker 5. On the other hand, the slave connector 4 may generate and publish a responding message to the MQTT broker 5 based on the sensing data returned from the slave device 22, where the responding message may include a designated topic (such as a second topic). If the master connector 3 subscribes to the second topic from the MQTT broker 5, every time when the slave connector 4 publishes a responding message including the second topic to the MQTT broker 5, the master connector 3 can automatically obtains this responding message from the MQTT broker 5.

In one embodiment, the title of the topic is a string coded by UTF-8. In the present disclosure, the topic structure 51 used by the MQTT protocol at least includes network group information, mode information (Mode) 513, slave device ID information (Slave ID) 514, and master device information. The network group information (including plant information (Plant) 511 and network information (Network) 512) describes the network location (e.g., plant or network area) where the transmitted message exists, the mode information 513 describes the transmitting mode of this message, the slave device ID information 514 describes the ID of the target slave device, the master device information (including master device ID information (Master ID) 515 and sequence information (Sequence ID) 516) describes the information about the source master device, including the ID of the master device 21 who sends the request and the process sequence of this request.

In one of the exemplary embodiments, the slave device ID information 514 uses the station ID within Modbus RTU, and the slave connector 4 may learn or set the station ID of one or more slave devices 22 connected with the slave connector 4. For example, if the network system includes two slave connectors 4, a setting error may cause the two slave connectors 4 to have the slave device 22 with the same station ID. In this case, a configuration of whitelist/blacklist can be used to block the error. Besides, for the request sent from the master connector 3 with respect to a non-existed slave device 22, the slave connector 4 doesn't have to process this request.

It should be mentioned that the topic content subscribed by the master connector 3 may include a network group and a sub-group below the network group, while the topic content subscribed by the slave connector 4 may include a specific device(s) and a sub-group below the device(s) (i.e., a slave connector 4 doesn't need to receive the message published by another slave connectors 4). However, in another embodiments, the topic content subscribed by the slave connector 4 may also include a network group and a sub-group below the network group, and the message published by another slave connector 4 may be filtered through filtering manners. Because the technical solution provided by the present disclosure supports the operation under multiple modes, the mode currently applied should be identified. In other words, the topic subscribed by the master connector 3 and the slave connector 4 can be optimized based on actual setting, so as to prevent the master connector 3 and the slave connector 4 from receiving unnecessary messages.

It should be mentioned that MQTT supports a device to simultaneously subscribe to multiple topics. Therefore, in one of the exemplary embodiments, the master connector 3 and the slave connector 4 can respectively subscribe to one or more topics.

In the present disclosure, the MQTT broker 5 may simultaneously parallelly connect with multiple master connectors 3 (such as a first master connector and a second master connector) and multiple slave connectors 4 (such as a first slave connector and a second slave connector), and both the requesting message sent by the master connectors 3 and the responding message sent by the slave connectors 4 include the topic being subscribed. Through the network group information, the slave device ID information 514, and the master device information within the topic structure 51, each slave device 22 may know which master device 21 sent the request, and each master device 21 may know which previously sent request the currently received response corresponds to. Therefore, the present disclosure can utilize the MQTT protocol to series connect multiple Modbus networks, so that the Modbus protocol can be applied to the Internet which has longer delays.

In one of the exemplary embodiments, in the topic structure 51 defined by the present disclosure, the mode information 513 includes a bridge mode (Bridge) and a tag mode (Tag), wherein the bridge mode is applied to request frequently changing (i.e., often changing) sensing data from the multiple slave devices 22, while the tag mode is applied to request infrequently changing (i.e., rarely changing) sensing data from the multiple slave devices 22, but not limited thereto.

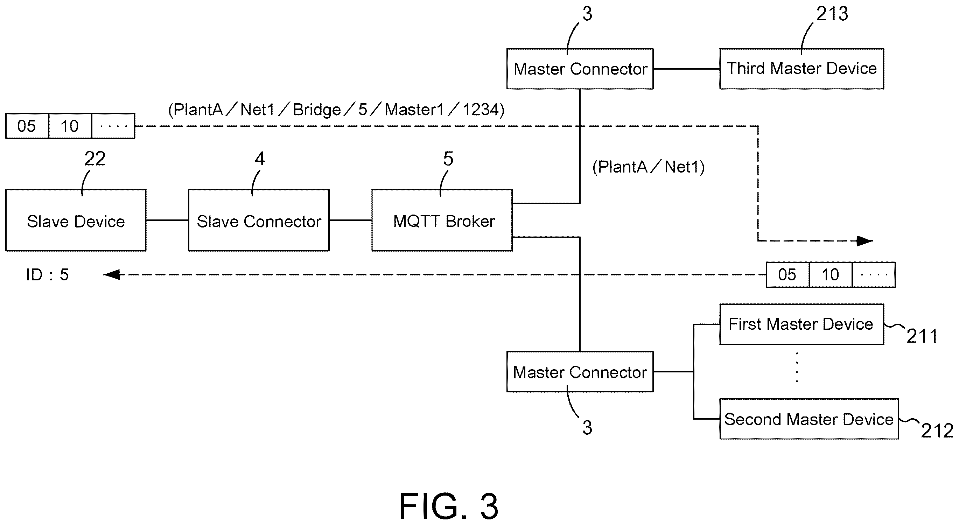

Please refer to FIG. 3, which is a schematic diagram showing the data transmission under a bridge mode of the present disclosure. In particular, when a message includes a topic where the mode information 513 inside is the bridge mode, the master connector 3, the slave connector 4, and the MQTT broker 5 will perform data transmission according to the approach disclosed in FIG. 3.

In the embodiment shown in FIG. 3, the MQTT broker 5 connects with multiple master connectors 3. One of the multiple master connectors 3 (such as a first master connector) connects to a first master device 211 and a second master device 212, and another one of the multiple master connectors 3 (such as a second master connector) connects to a third master device 213. The MQTT broker 5 further connects with one slave connector 4. The slave connector 4 connects to a slave device 22 having a slave ID of 5. As shown in FIG. 3, the first master device 211 sends a request, and the master connector 3 generates a requesting message correspondingly based on this request. The requesting message satisfies the MQTT protocol and includes header, topic, and content. The topic can be, for example, "PlantA/Net1/Bridge/5/master 1/1234", i.e., the network group information of the topic is network 1 of plant A, the mode information 513 is bridge mode, the slave device ID information 514 is ID: 5, the master device ID information 515 is the first master device 211, the sequence information 516 is 1234.

In the embodiment of FIG. 3, both of the master connector 3 and the slave connector 4 have subscribed to the above topic. When the master connector 3 generates the requesting message based on the request sent by the first master device 211 and publishes the requesting message to the MQTT broker 5 as a publisher, the slave connector 4 can automatically obtain the requesting message from the MQTT broker 5 as a subscriber. After receiving the requesting message, the slave connector 4 may schedule the requesting message (for example, the slave connector 4 may subscribe to multiple topics and can receive multiple requesting messages simultaneously, so the multiple requesting messages need to be scheduled), and inquire the sensing data from a corresponding slave device 22 (i.e., the slave device 22 with the slave ID of 5) based on the content of the requesting message.

After obtaining the corresponding sensing data from the slave device 22 having the ID of 5, the slave connector 4 may generate a responding message and publish the responding message to the MQTT broker 5 as a publisher. Because the content of the topic subscribed by the master connector 3 includes the network group information where the slave device 22 exists as well as the slave device ID information 514 of the slave device 22, the master connector 3 can automatically obtain the responding message from the MQTT broker 5 as a subscriber. Therefore, the master connector 3 can respond to the request sent by the first master device 211 with the sensing data in the responding message.

As discussed above, the MQTT broker 5 can connect with multiple master connectors 3 simultaneously. Because each master connector 3 may subscribe to different topic, when the MQTT broker 5 publishes messages, different master connectors may receive different push notifications.

The present disclosure connects multiple Modbus networks seriesly through the MQTT protocol, where the multiple Modbus networks may be located at different endpoints such as the Asian branch office and the American branch office respectively. Through the definition of the aforementioned topics, the delay time of the Internet does not affect the establishment of the correlation between requests and responses. However, if the number of transmitted packets is too large, due to the large delay of the Internet (which may be as high as several seconds), a lot of unnecessary time may be consumed when perform real-time data transmission through the bridge mode. To address this problem, for certain types of data (such as infrequently changing sensing data), the network system of the present disclosure can use the tag mode to perform batch updates.

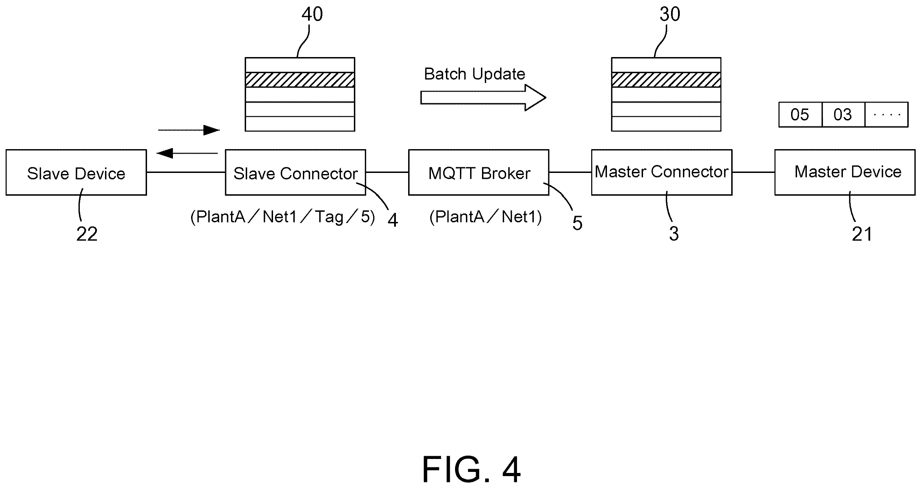

Please refers to FIG. 4, which is a schematic diagram showing the data transmission under a tag mode of the present disclosure.

In the embodiment of FIG. 4, the master connector 3 has a master cache 30 and the slave connector 4 has a slave cache 40. If the mode information 513 in the topic of the requesting message is the tag mode, the slave connector 4 may first inquire the sensing data from a corresponding slave device 22 (i.e., ID is 5) based on the requesting message, and then updates the slave cache 40 based on the sensing data. Also, the slave connector 4 regularly checks the content of the slave cache 40 to determine whether the data of the slave cache 40 has changed. In the present disclosure, the slave connector 4 generates and publishes the responding message to the MQTT broker 5 based on the updating status of the multiple sensing data in the slave cache 40 only if the slave connector 4 checks that the data of the slave cache 40 has changed. After the master connector 3 that subscribes to this topic receives this responding message, the master connector 3 may batch update the content of the master cache 30 based on the content of the responding message. Also, if the master connector 3 receives requests from the multiple master devices 21 and the master cache 30 stores the sensing data corresponding to these requests, the master connector 3 may directly respond to the requests from the multiple master devices 21 based on the corresponding data in the master cache 30.

When requesting and responding, the Modbus protocol performs the requesting and the responding through address information. In particularly, the master device 21 may request the data at a certain address from a certain slave device 22; when the slave device 22 receives the request, the slave device 22 may respond to the master device 21 with the sensing data from the certain address. With respect to different types of slave devices 22, the data at the requested address may be frequently changing data or infrequently changing data. The tag mode is applied to request infrequently changing data, while the bridge mode is applied to request frequently changing data, but not limited thereto.

In one of the exemplary embodiments, the master connector 3 and the slave connector 4 may communicate to determine the request address(es), therefore, the master connector 3 can set the master cache 30 based on these addresses and the slave connector 4 can set the slave cache 40 based on these addresses. After these addresses are set, the slave connector 4 can perform local monitoring to the slave devices 22 (i.e., unnecessary to continue hand shaking with the MQTT broker 5 and/or the master connector 4), and continue read the value from these addresses from the slave devices 22 to update the slave cache 40. In the embodiment, only when the data of the slave cache 40 has changed after updating, the slave connector 4 generates and publishes the responding message based on the updating status of the multiple sensing data in the slave cache 40, to batch update the master cache 30 of the master connector 3.

Under the tag mode, once the master cache 30 includes data corresponding to the request, the master connector 3 does not has to generate and publish the requesting message in real-time. Besides, the sensing data of the slave device 22 may remain unchanged, so it is unnecessary for the slave connector 4 to generate and publish the responding message in real-time every time after inquiring the sensing data from the slave devices 22. Therefore, the network system of the present disclosure can effectively reduce the packet transmission volume, save transmission time (time for hand shaking), and thereby improve transmission efficiency.

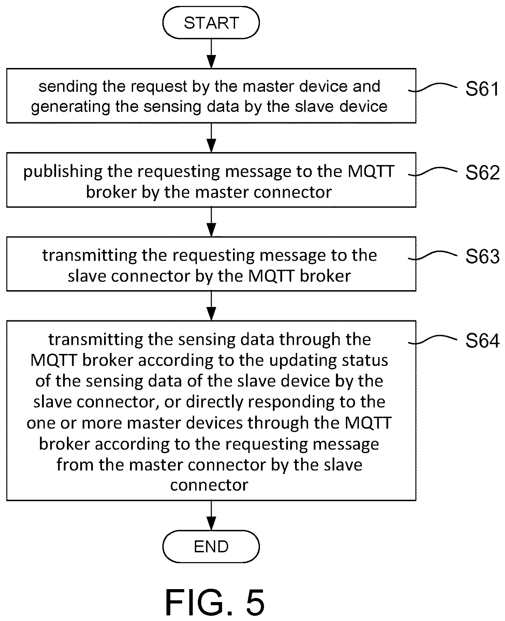

Please refer to FIG. 5, which is a first flowchart showing the data transmitting method of the present disclosure. FIG. 5 discloses the detailed flowchart for the data transmitting method of the present disclosure, where the data transmitting method is applied to the network system as disclosed in FIG. 1, the topic structure 51 as disclosed in FIG. 2, the bridge mode as disclosed in FIG. 3, and the tag mode as disclosed in FIG. 4.

As shown in FIG. 5, when applying the network system of the present disclosure, one or more of the multiple master devices 21 in the network system may send a request, and one or more of the multiple slave devices 22 may generate the sensing data due to its normal operation (step S61). The master connector 3 connects with the multiple master devices 21 and receives the request sent by the master devices 21 through the Modbus protocol (such as RS485 or TCP/IP). In the meantime, the master connector 3 generates the requesting message based on the received request and publishes the requesting message to the MQTT broker 5 as a MQTT publisher (step S62).

In the present disclosure, the MQTT broker 5 transmits the requesting message published by the master connector 3 to the slave connector 4 (step S63). In particularly, the requesting message includes a specific topic and the slave connector 4 subscribes to this specific topic from the MQTT broker 5. As a result, when the master connector 3 publishes the requesting message including the specific topic to the MQTT broker 5, the slave connector 4 can automatically obtain this requesting message from the MQTT broker 5.

After receiving this requesting message, the slave connector 4 schedules this requesting message, inquires the corresponding one of the slave devices 22 based on the content of the requesting message, and obtains the sensing data returned from the corresponding one of the slave devices 22. Based on the mode information 513 in the current topic being the bridge mode or the tag mode, the slave connector 4 may transmit the sensing data of the multiple slave devices 22 through the MQTT broker 5 according to the updating status of the sensing data of the multiple slave devices 22 (under the tag mode), or directly respond to the one or more of the multiple master devices 21 through the MQTT broker 5 according to the requesting message from the master connector 3 (under the bridge mode)(step S64). In other words, under the bridge mode, the slave connector 4 inquires the slave devices 22 and publishes the responding message correspondingly in real-time based on every requesting message; under the tag mode, the slave connector 4 only records the updating status of the sensing data of the slave devices 22 and batch updates the master cache 30 of the master connector 3 based on the updating status.

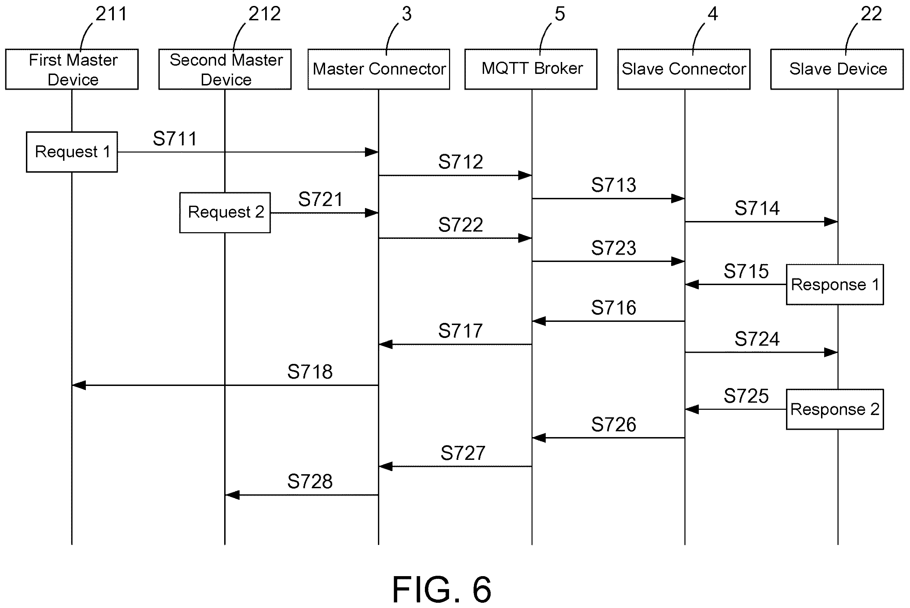

Please refer to FIG. 6 at the same time, wherein FIG. 6 is a chronology chart under the bridge mode of the present disclosure. FIG. 6 discloses the data transmission sequence of the network system when a first master device 211 and a second master device 212 respectively send a request to a slave device 22 under the bridge mode.

As disclosed in FIG. 6, the first master device 211 first sends a request 1 to the master connector 3 (step S711). The master connector 3 generates a first requesting message based on the request 1 and publishes the first requesting message to the MQTT broker 5 (step S712), wherein the first requesting message includes the first topic, the network group information in the first topic records the network group where the slave device 22 belongs to, the mode information 513 in first topic records the bridge mode, the slave device ID information 514 in the first topic records the ID of the slave device 22, the master device ID information 515 in the first topic records the ID of the first master device 211, and the sequence information 516 in the first topic records the sequence in which the first master device 211 sends the request 1. The content of the first requesting message is the request 1.

In the embodiment, the slave connector 4 subscribes to the first topic, so the slave connector 4 automatically obtains the first requesting message from the MQTT broker 5 (step S713). The slave connector 4 schedules the first requesting message (for example, the slave connector 4 receives the first requesting message, a second requesting message, and a third requesting message, etc. at the same time) and inquires the corresponding slave device 22 according to the schedule (for example, checks the ID recorded in the slave device ID information 514) (step S714). Also, the slave device 22 generates a response 1 for the slave connector 4 (step S715).

The slave connector 4 generates and publishes a first responding message to the MQTT broker 5 based on the response 1 returned from the slave device 22 (step S716), wherein the first responding message can also include the first topic. The master connector 3 subscribes to the first topic, so the master connector 3 may automatically obtains the first responding message from the MQTT broker 5 (step S717). Next, the master connector 3 responds to the first master device 211 who sends the request 1 based on the content of the first responding message (step S718).

Similarly, the second master device 212 sends a request 2 to the master connector 3 (step S721). The time point that the first master device 211 sends out the request 1 and the time point that the second master device 212 sends out the request 2 are not limited to the embodiment shown in FIG. 6. After receiving the request 2, the master connector 3 generates a second requesting message based on the request 2 and then publishes the second requesting message to the MQTT broker 5 (step S722), wherein the second requesting message includes a second topic, the network group information in the second topic records the network group where the slave device 22 belongs to, the mode information 513 in the second topic records the bridge mode, the slave device ID information 514 in the second topic records the ID of the slave device 22, the master device ID information 515 in the second topic records the ID of the second master device 212, and the sequence information 516 records the sequence in which the second master device 212 sends the request 2. The content of the second requesting message is the request 2. Through the definition of the topic, the slave device 22 will not confuse the response to the request 1 and the request 2.

In the embodiment, the slave connector 4 subscribes to the first topic and the second topic at the same time, so the slave connector 4 can automatically obtain the second requesting message from the MQTT broker 5 (step S723). Next, the slave connector 4 schedules the second requesting message and then inquires the slave device 22 based on the schedule (step S724). Also, the slave device 22 generates a response 2 to the slave connector 4 (step S725).

The slave connector 4 generates and publishes a second responding message to the MQTT broker 5 based on the response 2 returned from the slave device 22 (step S726), wherein the second responding message can also include the second topic. The master connector 3 subscribes to the first topic and the second topic at the same time, so the master connector 3 can automatically obtain the second responding message from the MQTT broker 5 (step S727). Next, the master connector 3 responds to the second master device 212 who sends the request 2 based on the content of the second responding message (step S728).

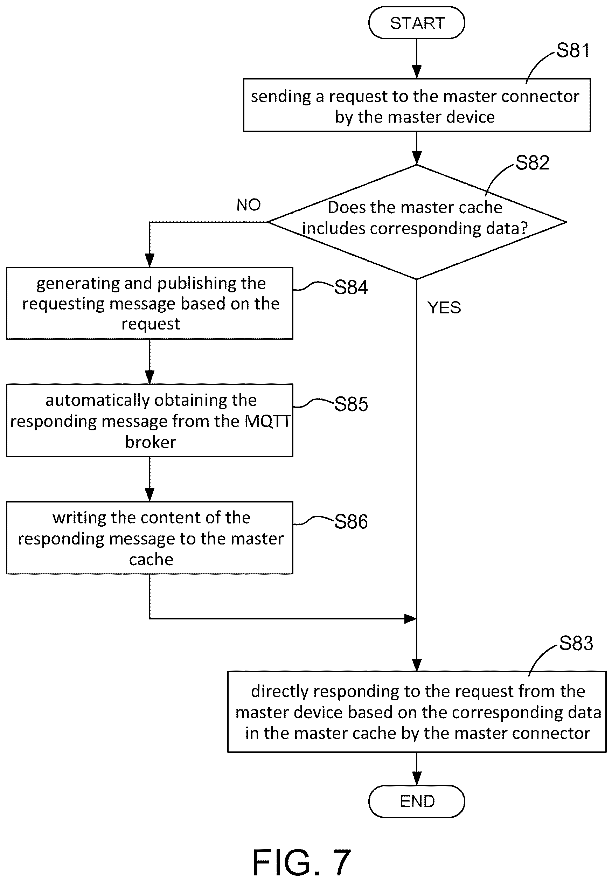

Please refer to FIG. 7 at the same time, wherein FIG. 7 is a second flowchart of the data transmitting method of the present disclosure. FIG. 7 discloses the detailed steps about how the master connector 3 processes and responds to the requests from multiple master devices 21 under the tag mode. Similarly, the approach disclosed in FIG. 7 is also applied to the network system as shown in FIG. 1 and the topic structure 51 as shown in FIG. 2.

First, the master connector 3 and the slave connector 4 need to complete the initial settings to establish corresponding caches (i.e., the master cache 30 and the slave cache 40) internally. As shown in FIG. 7, the master device 21 sends a request to the master connector 3 (step S81). After receiving the request, the master connector 3 determines whether the master cache 30 includes data corresponding to this request (step S82), i.e., the master connector 3 determines if the master connector 3 has published this request and received a corresponding response from the slave connector 4 before. In the embodiment, the master connector 3 obtains a responding message published by the slave connector 4 through subscription and records the data in the responding message (such as the sensing data returned from a target slave device) to the master cache 30. Therefore, if the master cache 30 includes data corresponding to the request sent by the master device 21, the master connector 3 does not publish a requesting message, but directly responds to the request of the one or more master devices 21 based on the corresponding data in the master cache 30 (step S83).

It should be mentioned that it is unnecessary for the master cache 30 and the slave cache 40 to be the same. To be more specific, the slave connector 4 may receive the requests from different master devices 21 (under the bridge mode) or different master connectors 3 (under the tag mode), so the required range may vary. In one embodiment, for same slave connector 4, the content of the slave cache 40 should at least entirely covers the content of the master cache 30 of a corresponding master connector 3.

When determining that the master cache 30 does not include the corresponding data for this request in the step S82, it means that the master connector 3 has never published a requesting message for inquiring with respect to this request. In this scenario, the master connector 3 applies an approach similar to the aforementioned bridge mode, which is generating and publishing a requesting message based on the request of the master device 21 (step S84). After the slave connector 4 inquires a corresponding one of the slave devices 22 based on the content of the requesting message and obtains a corresponding sensing data, the slave connector 4 generates and publishes a responding message. In the meantime, the master connector 3 automatically obtains the responding message from the MQTT broker 5 (step S85). The master connector 3 analyzes the responding message and writes the content of the responding message (such as the sensing data returned from the slave device 22) to the master cache 30 (step S86). Therefore, the master connector 3 may directly respond to the master device 21 who sends the request based on the content of the master cache 30 (step S83).

The bridge mode and the tag mode are simultaneously applied in the above step S84. For example, one request from the master connector 3 (such as a request A) may include two request fields, B and C, or include three request fields, B, C, and D, wherein the request field C belongs to the cache content of the master cache 30. In the meantime, If the master connector 3 sends the request A and receives a response, the master connector 3 can update the cache data of field C in the master cache 30. On the other hand, if the request A belongs to the cache field of the master cache 30, the master connector 3 can directly respond to the device based on the cache data in the master cache 30 without publishing the request A.

Through the above technical solution, once the master cache 30 includes corresponding data, the master connector 3 does not have to publish the requesting message to the MQTT broker, so the data transmission efficiency can be improved.

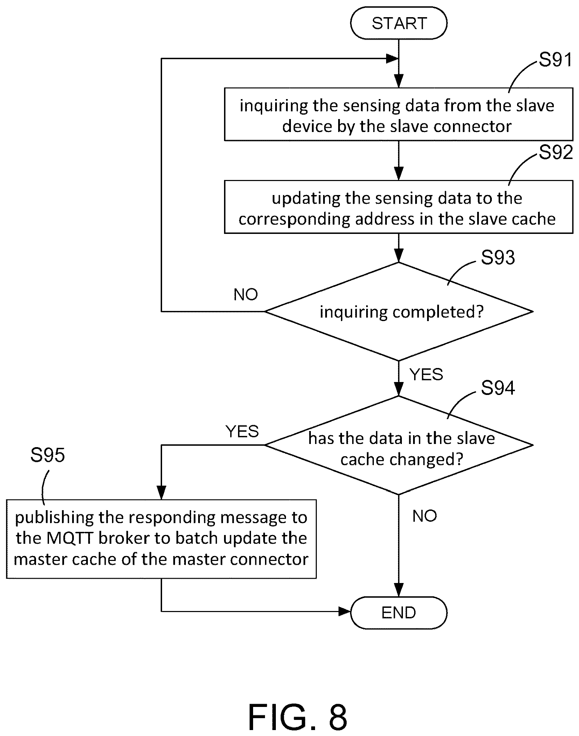

Please refer to FIG. 8 at the same time, wherein FIG. 8 is a third flowchart of the data transmitting method of the present disclosure. FIG. 8 discloses the detailed steps about how the slave connector 4 performs local monitoring to multiple slave devices 22 and performs batch update to the master connector 3 under the tag mode. Similarly, the approach shown in FIG. 8 is applied to the network system as shown in FIG. 1 and the topic structure 51 as shown in FIG. 2.

As discussed above, the slave connector 4 and the master connector 3 need to complete the initial settings to establish corresponding caches (i.e., the slave cache 40 and the master cache 30) internally. As discussed above, the tag mode is applied to request infrequently changing sensing data of the slave devices 22. After the establishment and the setting to the slave cache 40 and the master cache 30 are completed, the slave connector 4 may know what data at what addresses from which slave device(s) 22 that the master connector 3 wants to request. Therefore, multiple storage addresses in the slave cache 40 can be corresponding to multiple storage addresses in the master cache 30.

As shown in FIG. 8, after receiving the requesting message published by the master connector 3, the slave connector 4 inquires the target slave device for the sensing data (step S91). After receiving the sensing data returned from the slave device 22, the slave connector 4 updates the sensing data to the corresponding address in the slave cache 40 (step S92).

Next, the slave connector 4 determines whether all the slave device 22 related to the request is inquired completely (step S93). If the inquiring is not yet completed, the slave connector 4 again executes the step S91 and the step S92. If all the slave device 22 related to the request is completely inquired, the slave connector 4 determines whether the data in the slave cache 40 changes (step S94). The determination can be executed once (i.e., when a request is published under the bridge mode and the request covers the cache range of the slave cache 40) or periodically and continuously executed (i.e., the slave connector 4 periodically monitors the cache content of the slave cache 40), not limited thereto. In one of the exemplary embodiments, the slave connector 4 inquires the sensing data at a specific address from the slave device 22 and writes the sensing data to a specific address of the slave cache 40. Before writing, the slave connector 4 compares if the data from the slave device 22 and the data in the slave cache 40 are identical, and does not write the identical data to the slave cache 40, or still writes the identical data to the slave cache 40 and simultaneously notes that the data is unchanged.

If the data in the slave cache 40 has changed, it means the sensing data of the slave device 22 changes so a response with respect to the request of the master device 21 is necessary. Therefore, when determining that the data of the slave cache 40 changes, the slave connector 4 generates the aforementioned responding message based on the updating status of the multiple sensing data in the slave cache 40 (i.e., the changed part of data) and publishes the responding message to the MQTT broker 5, so as to batch update the master cache 30 of the master connector 3 through the MQTT broker 5 (step S95). More specifically, after the slave connector 4 publishes the responding message, the master connector 3 automatically obtains the responding message from the MQTT broker 5. Also, the master connector 3 batch updates data at corresponding address in the master cache 30 based on the content of the responding message. After the master cache 30 is updated completely, the master connector 3 responds to the request of the one or more master devices 21 based on the data in the updated master cache 30.

Through the above technical solution, the slave connector 4 may continually monitor the one or more slave devices 22 that are related to the request and only publish the responding message when the sensing data of the one or more slave devices 22 changes. Therefore, the data transmission efficiency can be improved.

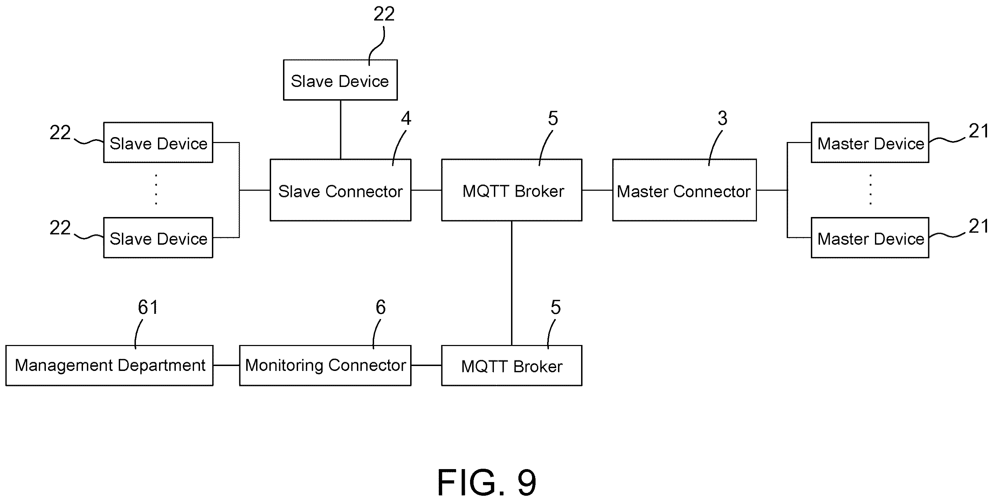

Please refer to FIG. 9, which is a schematic diagram showing the connection of the network system according to a second embodiment of the present disclosure. In the embodiment of FIG. 9, in addition to the master connector 3, the slave connector 4, and the MQTT broker 5, the network system further includes a monitoring connector 6. As shown in FIG. 9, the monitoring connector 6 connects with the MQTT broker 5 through the MQTT protocol, and the monitoring connector 6 subscribes to all topic from the MQTT broker 5.

In the embodiment, the monitoring connector 6 does not involve any request and response on the Modbus network, but continuously monitor and check all data stream on the network for a back-end management department 61. Therefore, the monitoring connector 6 can subscribe to all the topics from the MQTT broker 5, in other words, the monitoring connector 6 can receive all the MQTT messages being published to the MQTT broker 5.

In another embodiment, the network system may include multiple monitoring connectors 6 where each of the monitoring connectors 6 respectively monitors different data. For example, a first monitoring connector can subscribe to a topic including the plant information 511 of "PlantA" and the network information 512 of "Net1", therefore, all the messages transmitted within the network 1 will be automatically transmitted to the first monitoring connector after being published. For another example, a second monitoring connector can subscribe to a topic including the plant information 511 of "PlantA" and the network information of "Net2", therefore, all the messages transmitted within a network 2 will be automatically transmitted to the second monitoring connector after being published. For another example, a third monitoring connector can subscribe to a topic including the slave device ID information 514 of "10", therefore, all the messages about the slave device 22 having the ID of 10 will be automatically transmitted to the third monitoring connector after being published, and so on.

In the embodiment, the monitoring connector 6 receives messages only but not involves sending the request and responding to the request. Therefore, the monitoring connector 6 can be utilized to generate a network topology, that is, to depict which networks (such as Net1, Net2, and Net3, etc.) the entire network system covers, which devices (the master devices 21 and the slave devices 22) are included under these networks respectively, and which devices are currently hand shaking, etc. This is beneficial for the back-end management department 61 to evaluate and optimize the entire network system.

In one of the exemplary embodiments of the present disclosure, the master connector 3, the slave connector 4, and the monitoring connector 6 are individual electronic devices internally having hardware components such as processors, storages, connection ports, and network connection interfaces, etc. By using the processors and the storages, the master connector 3, the slave connector 4, and the monitoring connector 6 can execute the data transmitting method of the present disclosure; by using the connection ports, the master connector 3, the slave connector 4, and the monitoring connector 6 can connect with the master devices 21 or the slave devices 22 through wired manner (such as RS485); by using the network connection interfaces, the master connector 3, the slave connector 4, and the monitoring connector 6 can connect with the master devices 21, the slave devices 22, and the MQTT broker 5 through wireless manner (such as TCP/IP).

In another embodiment, the master connector 3, the slave connector 4, and the monitoring connector 6 can be implemented through software, and the master connector 3, the slave connector 4, and the monitoring connector 6 can be installed in existed hardware components (such as a router, a gateway, one of the master devices, or one of the slave devices) on the network system. This hardware component connects with the MQTT broker 5 through Ethernet and connects with the master devices 21 or the slave devices 22 through RS485 or TCP/IP. In another embodiment, the hardware component can be a giant device (such as a server) internally including multiple master devices 22 or multiple slave devices 22. After this hardware component has been installed with the aforementioned software, it can actively serve the multiple master devices 21 or multiple slave devices 22 internally as a master connector 3 or a slave connector 4. It should be mentioned that, if the master connector 3 and the slave connector 4 of the present disclosure are implemented through software, the user can directly set the addresses of the target slave devices for the frequently changing data and the infrequently changing data. Therefore, when using the software as the master connector 3 and the slave connector 4, they can automatically determine to apply the bridge mode to immediately inquire and respond or apply the tag mode to batch update when data changes based on the addresses for the data pointed out in the request.

Through using the network system and the data transmitting method of the present disclosure, even if the master devices and the slave devices within the Modbus network communicate over the Internet that has a relatively long delay time, the topic in the MQTT protocol can correlate the request from the master devices with the response from the slave devices without causing confusion. Therefore, the applicable scope of the Modbus network can be effectively expanded.

## Claims

1. An MQTT-based Modbus network system, comprising:
multiple first master devices, each of the first master devices respectively configured to send a request;
multiple first slave devices, each of the first slave devices respectively configured to generate sensing data;
an MQTT broker;
a first master connector, connected with the multiple first master devices through Modbus protocol and connected with the MQTT broker through MQTT protocol, configured to publish a requesting message to the MQTT broker based on the requests of the multiple first master devices and manage a responding message related to the requesting message; and
a first slave connector, connected with the multiple first slave devices through the Modbus protocol and connected with the MQTT broker through the MQTT protocol, configured for:
transmitting sensing data of the multiple first slave devices through the MQTT broker based on an updating status of the sensing data of the multiple first slave devices; or, responding to one or more of the multiple first master devices according to the requesting message from the first master connector.

2. The MQTT-based Modbus network system according to claim 1, wherein the requesting message comprises a topic, and a topic structure used by the MQTT protocol at least comprises network group information, mode information, slave device ID information, master device ID information, and sequence information.

3. The MQTT-based Modbus network system according to claim 2, wherein the mode information comprises a bridge mode and a tag mode.

4. The MQTT-based Modbus network system according to claim 3, wherein the bridge mode is applied to request the sensing data that belongs to frequently changing data from the multiple first slave devices and the tag mode is applied to request the sensing data that belongs to infrequently changing data from the multiple first slave devices.

5. The MQTT-based Modbus network system according to claim 3, wherein the first slave connector is configured to subscribe to the topic from the MQTT broker, when the first master connector publishes the requesting message comprising the topic to the MQTT broker, the first slave connector automatically obtains the requesting message from the MQTT broker.

6. The MQTT-based Modbus network system according to claim 3, wherein when the mode information in the topic is the bridge mode, the first slave connector is configured to schedule the requesting message after receiving the requesting message, inquire a corresponding one of the first slave devices for the sensing data based on the content of the requesting message, and generate and publish a responding message to the MQTT broker based on the sensing data, wherein the first master connector is configured to subscribe to a specific topic comprising the network group information and the slave device ID information related to the first slave device from the MQTT broker, after the first slave connector publishes the responding message, the first master connector is configured to automatically obtain the responding message from the MQTT broker and respond to the request from one or more of the first master devices based on data in the responding message.

7. The MQTT-based Modbus network system according to claim 3, wherein when the mode information in the topic is the tag mode, the first slave connector is configured to inquire the sensing data from a corresponding one of the first slave devices based on the requesting message, update a slave cache of the first slave connector based on the sensing data, and generate and publish the responding message to the MQTT broker, to batch update a master cache of the first master connector, based on the updating status of the multiple sensing data in the slave cache when determining that data in the slave cache has changed, wherein the first master connector is configured to respond to the request of the multiple first master devices based on data in the master cache.

8. The MQTT-based Modbus network system according to claim 4, further comprising a monitoring connector, connected with the MQTT broker through the MQTT protocol, configured to subscribe to all topic from the MQTT broker.

9. The MQTT-based Modbus network system according to claim 1, further comprising:
multiple second master devices, each of the second master devices respectively configured to send a second request; and
a second master connector, connected with the multiple second master devices through the Modbus protocol and connected with the MQTT broker through the MQTT protocol, configured to publish a second requesting message to the MQTT broker based on the second requests of the multiple second master devices and manage a second responding message related to the second requesting message.

10. A data transmitting method, applied to a network system comprising an MQTT broker, a first master connector, and a first slave connector, wherein the MQTT broker connected with the first master connector and the first slave connector through MQTT protocol, the first master connector connected with multiple first master devices through Modbus protocol, the first slave connector connected with multiple first slave devices through the Modbus protocol, and the data transmitting method comprising:
step a) respectively sending a request by the multiple first master devices and respectively generating sensing data by the multiple first slave devices;
step b) publishing a requesting message to the MQTT broker based on the requests from the multiple master devices by the first master connector;
step c) transmitting the requesting message to the first slave connector by the MQTT broker; and
step d) by the first slave connector, transmitting the sensing data from the multiple slave devices through the MQTT broker based on an updating status of the sensing data of the multiple slave devices, or responding to one or more of the multiple first master devices through the MQTT broker based on the requesting message from the first master connector.

11. The data transmitting method according to claim 10, wherein the requesting message comprises a topic, and a topic structure used by the MQTT protocol at least comprises network group information, mode information, slave device ID information, master device ID information, and sequence information, wherein the mode information comprises a bridge mode and a tag mode.

12. The data transmitting method according to claim 11, wherein the first slave connector subscribes to the topic from the MQTT broker, and the step c) comprises automatically obtaining the requesting message from the MQTT broker by the first slave connector when the first master connector sends the requesting message comprising the topic to the MQTT broker.

13. The data transmitting method according to claim 11, wherein when the mode information in the topic is the bridge mode, the step d) comprises:
step d11) scheduling the requesting message and inquiring a corresponding one of the first slave devices for the sensing data based on the content of the requesting message by the first slave connector;
step d12) generating and publishing a responding message to the MQTT broker based on the sensing data by the first slave connector;
step d13) automatically obtaining the responding message from the MQTT broker by the first master connector after the first slave connector publishes the responding message, wherein the first master connector subscribes to a specific topic comprising the network group information and the slave device ID information related to the first slave device from the MQTT broker; and
step d14) responding to the request from one or more of the first master devices based on data in the responding message by the first master connector.

14. The data transmitting method according to claim 11, wherein when the mode information in the topic is the tag mode, the step d) comprises:
step d21) inquiring the sensing data from a corresponding one of the first slave devices based on the requesting message by the first slave connector;
step d22) updating a slave cache of the first slave connector based on the sensing data by the first slave connector;
step d23) determining whether data in the slave cache changes by the first slave connector, wherein the first slave connector determines that the data in the slave cache changes when the request is sent under the bridge mode and the request covers a cache range of the slave cache, or the first slave connector regularly monitors cache content of the slave cache to determine whether the data in the slave cache has changed; and
step d24) when determining that the data in the slave cache changes, generating and publishing the responding message to the MQTT broker by the first slave connector based on the updating status of the sensing data in the slave cache;
wherein, the first master connector receives the responding message from the MQTT broker to batch update a master cache of the first master connector and responds to the request from one or more of the first master devices based on data in the master cache.

15. The data transmitting method according to claim 14, wherein when the mode information in the topic is the tag mode, further comprises following steps after the step a):
step al) determining whether the master cache comprises data corresponding to the request by the first master connector;
step a2) when the master cache comprises data corresponding to the request, directly responding to the request of the one or more of the first master devices based on the data corresponding to the request from the master cache; and
step a3) when the master cache does not comprise data corresponding to the request, executing the step b) to the step d).

16. The data transmitting method according to claim 11, wherein the network system further comprises a monitoring connector connected with the MQTT broker through the MQTT protocol to subscribe to all topic from the MQTT broker.
